# EUROPEAN PATENT SPECIFICATION

(11) **EP 3 923 631 B1**
(45) Date of publication and mention of the grant of the patent: **29.11.2023**
(21) Application number: 21186538.1
(22) Date of filing: 24.06.2016
(51) Int. Cl.: H04W 36/18

(54) **SYSTEMS AND METHODS FOR REDUCING INTERRUPTIONS IN DATA TRANSMISSIONS DUE TO HANDOVER OPERATIONS**
SYSTEME UND VERFAHREN ZUR VERRINGERUNG VON UNTERBRECHUNGEN BEI DATENÜBERTRAGUNGEN AUFGRUND VON ÜBERGABEOPERATIONEN
SYSTÈMES ET PROCÉDÉS POUR RÉDUIRE DES INTERRUPTIONS DANS DES TRANSMISSIONS DE DONNÉES EN RAISON D'OPÉRATIONS DE TRANSFERT INTERCELLULAIRE

(30) Priority: 12.02.2016 US 201662294623 P
(43) Date of publication of application: 15.12.2021
(62) Divisional of application: 16741431.7
(73) Proprietor: Apple Inc., Cupertino CA 95014 (US)
(72) Inventor: YIU, Candy, Portland (US); ZHANG, Yujian, Beijing (CN); HEO, Youn Hyoung, Seoul (KR); PALAT, Sudeep, Cheltenham (GB); FONG, Mo-Han, Sunnyvale (US)
(74) Representative: Barnfather, Karl Jon

(56) References cited:
- EP-A2- 2 770 796
- WO-A1-2015/108389
- US-A1- 2015 085 646
- US-A1- 2015 215 827
- "3rd Generation Partnership Project; Technical Specification Group Radio Access Network; Evolved Universal Terrestrial Radio Access (E-UTRA); Study on latency reduction techniques for LTE (Release 13)", 3GPP DRAFT; R2-157181_36881-050, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 30 November 2015 (2015-11-30), XP051065267, Retrieved from the Internet: URL:http://www.3gpp.org/ftp/tsg_ran/WG2_RL 2/TSGR2_92/LSout/ [retrieved on 2015-11-30]
- INTEL CORPORATION: "Analysis on reduction of handover interruption", 3GPP DRAFT; R2-154813, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Malmo, Sweden; 20151005 - 20151009 26 September 2015 (2015-09-26), XP051024004, Retrieved from the Internet: URL:http://www.3gpp.org/ftp/tsg_ran/WG2_RL 2/TSGR2_91bis/Docs/ [retrieved on 2015-09-26]
- INTEL CORPORATION: "Discussion of solution 2: Maintaining source eNB connection during handover", 3GPP DRAFT; R2-162719, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Dubrovnik, Croatia; 20160411 - 20160415 2 April 2016 (2016-04-02), XP051082516, Retrieved from the Internet: URL:http://www.3gpp.org/ftp/tsg_ran/WG2_RL 2/TSGR2_93bis/Docs/ [retrieved on 2016-04-02]

## Description

### FIELD

Implementations of the claimed invention generally relate to the field of wireless communications, and in particular, to reducing interruptions in data transmission/reception during handover operations in Long Term Evolution (LTE) wireless communications networks.

### BACKGROUND

In cellular communications networks, a user equipment (UE) may undergo a handover (HO) operation to transfer an ongoing voice call or data session from a source evolved nodeB (eNB) to a target eNB. The source eNB may initiate the HO operation based on a measurement report received from the UE. The source eNB may send an HO command to the UE after receiving an HO request acknowledgement (ACK) from the target eNB in response to an HO request. At this point, the source eNB stops data transmission to the UE since the UE detaches from the source eNB and synchronizes with the target eNB. If the source eNB still has data intended for the UE, the source eNB may send a sequence number (SN) status transfer and forward the data packets intended for the UE to the target eNB so that the target eNB can transmit such data to UE once the HO operation is complete. However, the UE will likely have an interruption in data reception during the time between reception of the HO command and completion of the HO operation due to detaching from the source eNB. This interruption in data reception during the HO operation may degrade UE experience.

3GPP TR 36.881, V0.5.0, 3rd Generation Partnership Project; Technical Specification Group Radio Access Network; Evolved Universal Terrestrial Radio Access (E-UTRA); Study on latency reduction techniques for LTE (Release 13), November 2015 discloses an overview of LTE latency, scenarios, applications and use cases, evaluation structure and assumptions, solutions for latency reduction, and performance evaluation.

### SUMMARY

The object of the present application is solved by the independent claims. Advantageous embodiments are described by the dependent claims. Embodiments not falling under the scope of the claims should be understood as examples useful for understanding the invention.

### BRIEF DESCRIPTION OF THE DRAWINGS

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.
FIG. 1 illustrates a cellular communications network in accordance with various example embodiments;
FIG. 2 illustrates example components of an electronic device for wireless communication, in accordance with various example embodiments;
FIG. 3 illustrates an interface scheme between elements of a cellular communications network, in accordance with various embodiments;
FIG. 4 illustrates a process for performing a handover operation performed by various elements of the cellular communications network of FIG. 1, in accordance with various embodiments;
FIG. 5 illustrates a process that may be performed by a UE to receive downlink transmissions during a handover operation, in accordance with various embodiments;
FIG. 6 illustrates another process that may be performed by a UE to receive downlink transmissions during a handover operation according to various embodiments; and
FIG. 7 illustrates another process that may be performed by a UE to receive downlink transmissions during a handover operation, in accordance with various embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc., in order to provide a thorough understanding of the various aspects of the claimed invention. However, it will be apparent to those skilled in the art having the benefit of the present disclosure that the various aspects of the invention claimed may be practiced in other examples that depart from these specific details. In certain instances, descriptions of well-known devices, circuits, and methods are omitted so as not to obscure the description of the present invention with unnecessary detail.

Various aspects of the illustrative embodiments will be described using terms commonly employed by those skilled in the art to convey the substance of their work to others skilled in the art. However, it will be apparent to those skilled in the art that alternate embodiments may be practiced with only some of the described aspects. For purposes of explanation, specific numbers, materials, and configurations are set forth in order to provide a thorough understanding of the illustrative embodiments. However, it will be apparent to one skilled in the art that alternate embodiments may be practiced without the specific details. In other instances, well-known features are omitted or simplified in order not to obscure the illustrative embodiments.

Further, various operations will be described as multiple discrete operations, in turn, in a manner that is most helpful in understanding the illustrative embodiments; however, the order of description should not be construed as to imply that these operations are necessarily order dependent. In particular, these operations need not be performed in the order of presentation.

The phrase "in various embodiments," "in some embodiments," and the like are used repeatedly. The phrase generally does not refer to the same embodiments; however, it may. The terms "comprising," "having," and "including" are synonymous, unless the context dictates otherwise. The phrase "A and/or B" means (A), (B), or (A and B). The phrases "A/B" and "A or B" mean (A), (B), or (A and B), similar to the phrase "A and/or B." For the purposes of the present disclosure, the phrase "at least one of A and B" means (A), (B), or (A and B). The description may use the phrases "in an embodiment," "in embodiments," "in some embodiments," and/or "in various embodiments," which may each refer to one or more of the same or different embodiments. Furthermore, the terms "comprising," "including," "having," and the like, as used with respect to embodiments of the present disclosure, are synonymous.

Example embodiments may be described as a process depicted as a flowchart, a flow diagram, a data flow diagram, a structure diagram, or a block diagram. Although a flowchart may describe the operations as a sequential process, many of the operations may be performed in parallel, concurrently, or simultaneously. In addition, the order of the operations may be re-arranged. A process may be terminated when its operations are completed, but may also have additional steps not included in the figure(s). A process may correspond to a method, a function, a procedure, a subroutine, a subprogram, and the like. When a process corresponds to a function, its termination may correspond to a return of the function to the calling function and/or the main function.

As used herein, the term "circuitry" refers to, is part of, or includes hardware components such as an Application Specific Integrated Circuit (ASIC), an electronic circuit, a logic circuit, a processor (shared, dedicated, or group) and/or memory (shared, dedicated, or group) that are configured to provide the described functionality. In some embodiments, the circuitry may execute one or more software or firmware programs to provide at least some of the described functionality. Example embodiments may be described in the general context of computer-executable instructions, such as program code, software modules, and/or functional processes, being executed by one or more of the aforementioned circuitry. The program code, software modules, and/or functional processes may include routines, programs, objects, components, data structures, etc., that perform particular tasks or implement particular data types. The program code, software modules, and/or functional processes discussed herein may be implemented using existing hardware in existing communication networks. For example, program code, software modules, and/or functional processes discussed herein may be implemented using existing hardware at existing network elements or control nodes.

As used herein, the term "processor circuitry" refers to, is part of, or includes circuitry capable of sequentially and automatically carrying out a sequence of arithmetic or logical operations; recording, storing, and/or transferring digital data. The term "processor circuitry" may refer to one or more application processors, one or more baseband processors, a physical central processing unit (CPU), a single-core processor, a dual-core processor, a triple-core processor, a quad-core processor, a Universal Integrated Circuit Card (UICC) or embedded UICC (eUICC), and/or any other device capable of executing or otherwise operating computer-executable instructions, such as program code, software modules, and/or functional processes. As used herein, the term "interface circuitry" refers to, is part of, or includes circuitry providing for the exchange of information between two or more components or devices. The term "interface circuitry" may refer to one or more hardware interfaces (for example, buses, input/output (I/O) interfaces, peripheral component interfaces, and the like).

As used herein, the term "user equipment" may be considered synonymous to, and may hereafter be occasionally referred to, as a client, mobile, mobile device, mobile terminal, user terminal, mobile unit, mobile station, mobile user, UE, subscriber, user, remote station, access agent, user agent, receiver, etc., and may describe a remote user of network resources in a communications network. Furthermore, the term "user equipment" may include any type of wireless/wired device such as consumer electronics devices, cellular phones, smartphones, tablet personal computers, wearable computing devices, personal digital assistants (PDAs), desktop computers, and laptop computers, for example.

As used herein, the term "network element" may be considered synonymous to and/or referred to as a networked computer, networking hardware, network equipment, router, switch, hub, bridge, radio network controller, radio access network device, gateway, server, and/or any other like device. The term "network element" may describe a physical computing device of a wired or wireless communication network and be configured to host a virtual machine. Furthermore, the term "network element" may describe equipment that provides radio baseband functions for data and/or voice connectivity between a network and one or more users. The term "network element" may be considered synonymous to and/or referred to as a "base station." As used herein, the term "base station" may be considered synonymous to and/or referred to as a node B, an enhanced or evolved node B (eNB), base transceiver station (BTS), access point (AP), etc., and may describe equipment that provides the radio baseband functions for data and/or voice connectivity between a network and one or more users.

It should also be noted that the term "channel" as used herein may refer to any transmission medium, either tangible or intangible, which is used to communicate data or a data stream. Additionally, the term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated.

Embodiments herein relate to facilitating continuous downlink transmissions during handover operations. In typical wireless networks, a UE may not receive downlink transmissions during a handover operation, which may degrade UE experience. The example embodiments provide systems and methods, which allow a UE to receive downlink transmissions from a source base station while completing a handover operation with a target base station. The example embodiments may reduce interruptions in downlink transmissions due to handover operations. Embodiments provide UE related procedures for supporting continuous downlink reception during HO, including key management, simultaneous reception, Packet Data Convergence Protocol (PDCP) packet handling, PDCP status reporting, Radio Link failure handling, HO failure handling, and Dual connectivity handling. Other embodiments may be described and/or claimed. Other embodiments may be described and/or claimed.

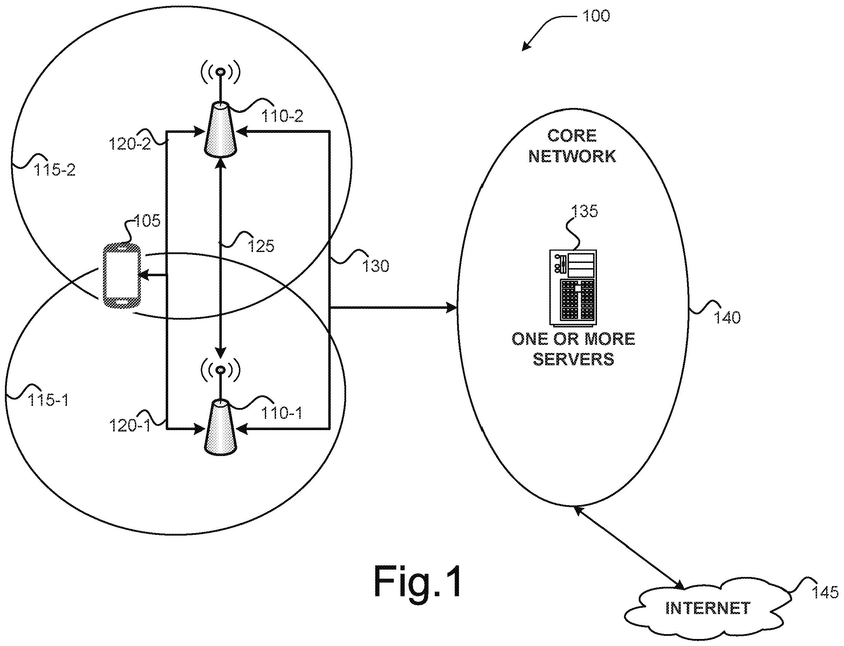

FIG. 1 illustrates an example of a cellular communications network 100 (also referred to as "network 100" and the like), according to an example embodiment. Network 100 includes UEs 105, two eNBs 110 (eNB 110-1 and eNB 110-2 are collectively referred to as "eNB 110" or "eNBs 110"), and to cells 115 (cell 115-1 and cell 115-2 are collectively referred to as "cell 115" or "cells 115"). The following description is provided for an example network 100 that operates in conjunction with the Long Term Evolution (LTE) standard as provided by 3rd Generation Partnership Project (3GPP) technical specifications (TS). However, the example embodiments are not limited in this regard and the described embodiments may apply to other networks that benefit from the principles described herein.

Referring to FIG. 1, UE 105 may be a physical hardware device capable of running one or more applications and capable of accessing network services via one or more radio links 120 (radio link 120-1 and radio link 120-2 are collectively referred to as "radio links 120" or "links 120") with corresponding eNBs 110. A link 120 may allow the UE 105 to transmit and receive data from an eNB 110 that provides the link 120. To transmit/receive data to/from one or more eNBs 110, UE 105 may include a transmitter/receiver (or alternatively, a transceiver), memory, one or more processors, and/or other like components that enable UE 105 to operate in accordance with one or more wireless communications protocols and/or one or more cellular phone communications protocols. In various embodiments, UE 105 may have multiple antenna elements that enable the UE 105 to maintain multiple links 120 to transmit/receive data to/from multiple eNBs 110. For example, as shown in FIG. 1, UE 105 may connect with eNB 110-1 via link 120-1 and simultaneously connect with eNB 110-2 via link 120-2. Furthermore, UE 105 may be capable of measuring various cell-related criteria, such as channel conditions and signal quality (for example, reference signal received power (RSRP), reference signal received quality (RSRQ), and the like), and provide a measurement report including this information to an eNB 110. Examples of UE 105 may include a wireless phone or smartphone, a laptop personal computer (PC), a tablet PC, a wearable computing device, an autonomous sensor or other like machine type communication (MTC) device, and/or any other physical device capable of recording, storing, and/or transferring digital data to/from eNB 110 and/or any other like network element.

The eNBs 110 are hardware computing devices configured to provide wireless communication services to mobile devices (for example, UE 105) within a coverage area or cell 115 associated with an eNB 110 (for example, cell 115-1 associated with eNB 110-1). A cell 115 providing services to UE 105 may also be referred to as a "serving cell," "cell coverage area," and the like. As discussed previously, eNBs 110 may provide wireless communication services to UE 105 via links 120. The links 120 between the eNBs 110 and the UE 105 may include one or more downlink (or forward) channels for transmitting information from eNB 110 to UE 105. Although not shown by FIG. 1, links 120 may also include one or more uplink (or reverse) channels for transmitting information from UE 105 to an eNB 110. The channels may include the physical downlink shared channel (PDSCH), physical downlink control channel (PDCCH), physical hybrid automatic repeat request (HARQ) indicator channel (PHICH), physical control format indicator channel (PCFICH), physical broadcast channel (PBCH), physical uplink shared channel (PUSCH), physical uplink control channel (PUCCH), physical random access channel (PRACH), and/or any other like communications channels or links used to transmit/receive data.

In various embodiments, eNBs 110 include a transmitter/receiver (or alternatively, a transceiver) connected to one or more antennas, one or more memory devices, one or more processors, and/or other like components. The one or more transmitters/receivers may be configured to transmit/receive data signals to/from one or more UEs 105 within its cell 115 via one or more links that may be associated with a transmitter and a receiver. In embodiments where network 100 employs the LTE or LTE-A standard, eNBs 110 may employ Evolved Universal Terrestrial Radio Access (E-UTRA) protocols, for example, using orthogonal frequency-division multiple access (OFDMA) for scheduling and transmitting downlink communications and single carrier frequency-division multiple access (SC-FDMA) for scheduling and receiving uplink communications from UE 105. Furthermore, eNBs 110 may be capable of communicating with one another over a backhaul connection 125 and may communicate with one or more servers 135 within a core network (CN) 140 over another backhaul connection 130. In embodiments where network 100 employs the LTE or LTE-A standard, backhaul connection 125 may include a wired connection employing an X2 interface, which defines an interface for communicating data packets directly between eNBs 110. Furthermore, in such embodiments the backhaul connection 130 may include a wired connection employing an S1 interface, which defines a protocol for the forwarding of packets indirectly between eNBs 110 by way of one or more mobility management entities (MMEs) and/or a Serving Gateway (SGW). In embodiments, various HO-related messages may be communicated directly between the eNBs 110 over the X2 interface (for example, during an X2-HO operation or an Intra-MME HO) or indirectly between the eNBs 110 over the S1 interface (for example, during an S1-HO operation or an Inter-MME HO).

In many deployment scenarios, the UE 105 may undergo a handover (HO) operation when moving between cells 115. For example, when UE 105 moves from cell 115-1 to cell 115-2, eNB 110-1 may handover UE 105 to eNB 110-2. In this case, eNB 110-2 may be considered a "source cell" or a "source eNB" and eNB 110-2 may be considered a "target cell" or a "target eNB." Typically, the source eNB 110-1 may send measurement configuration to the UE to request a measurement report from the UE 105 when certain configured event(s) triggered, and the UE 105 may perform signal quality or cell power measurements for channels or links 120 of the target eNB 110-2 and/or other neighboring cells (not shown). Based on the results of the measurement, some configured events may trigger the UE to send the measurement report to the source eNB. The source eNB 110-1 may decide to handover the UE to the target eNB by initiating the HO operation. To initiate the HO operation, the source eNB 110-1 may transmit an HO request message to the target eNB 110-2, and in response, the source eNB 110-1 may receive an HO request acknowledgement (ACK) from the target eNB 110-2. Once the HO request ACK is received, the source eNB 110-1 may send an HO command to the UE to begin an attachment process with the target eNB 110-2. At this point, the source eNB 110-1 stops data transmission to the UE since the UE detaches from the source eNB 110-1 and start synchronization with the target eNB 110-2. If the source eNB 110-1 still has data intended for the UE, the source eNB 110-1 may send a sequence number (SN) status transfer to the target eNB 110-2 and data forwarding so that the target eNB 110-2 can transmit such data to UE 105 once the HO operation is complete. However, because the UE 105 detaches from the source eNB 110-1 during the typical HO operation, the UE 105 will likely experience an interruption in data reception during the time between reception of the HO command and completion of the HO operation.

According to various embodiments, the UE 105 may continue to receive downlink transmissions from a source eNB (for example, source eNB 110-1) while a HO operation occurs with a target eNB (for example, target eNB 110-2). In embodiments, in order to reduce the HO interruption time, the UE 105 may receive downlink data from source eNB 110-1 after receiving the HO command and before receiving a random access message from target eNB 110-2, such as a random access response (RAR). Example embodiments also provide a new UE protocol stack architecture in order to enable the UE 105 to receive downlink receptions and uplink transmissions from/to the source eNB 110-1 after receiving the HO command and before completion of the HO operation. Typically, the UE 105 will generate or create a protocol stack for communicating with an eNB 110. During conventional HO operations, a UE 105 will reset the protocol stack created for communicating with the source eNB 110 and prepare the protocol stack for communicating with the target eNB 110 prior to attaching to the target eNB. In embodiments, the UE 105 may create or generate the target eNB 110 protocol stack without resetting the source eNB 110 protocol stack. In some embodiments, the UE 105 may activate the target eNB 110 protocol stack, or portions thereof, after receiving an RAR from target eNB 110-2.

Although not shown by FIG. 1, each eNB 110 may be part of a radio access network (RAN) or associated with a radio access technology (RAT). In embodiments where communications network 100 employs the LTE standard, the RAN may be referred to as an evolved universal terrestrial radio access network (E-UTRAN). RANs and their typical functionality are generally well-known, and thus, a further detailed description of the typical functionality of RAN is omitted.

The network 100 may include CN 140, which may include one or more hardware devices, such as the one or more servers 135. These servers may provide various telecommunications services to the UEs 105. In embodiments where network 100 employs the LTE standards, the one or more servers 135 of the CN 140 may comprise components of the System Architecture Evolution (SAE) with an Evolved Packet Core (EPC) as described by 3GPP technical specifications. In such embodiments, the one or more servers 135 of the CN 140 may include components such as one or more MMEs and/or Serving General Packet Radio Service Support Nodes (SGSNs) (which may be referred to as an "SGSN/MME"), a serving gateway (SGW), packet data network (PDN) gateway (PGW), home subscriber server (HSS), access network discovery and selection function (ANDSF), evolved packet data gateway (ePDG), an MTC interworking function (IWF), and/or other like components as are known. The various elements of the CN 140 may route phone calls from UE 105 to other mobile phones or landline phones, or provide the UE 105 with a connection to the internet 145 for communication with one or more other computer devices. Because the components of the SAE core network and their functionality are generally well-known, a further detailed description of the SAE core network is omitted. It should also be noted that the aforementioned functions may be provided by the same physical hardware device or by separate components and/or devices.

Although FIG. 1 shows two cell coverage areas (for example, cells 115), two base stations (for example, eNBs 110), and one mobile device (for example, UE 105), it should be noted that in various example embodiments, network 100 may include many more eNBs serving many more UEs than those shown in FIG. 1. However, it is not necessary that all of these generally conventional components be shown in order to understand the example embodiments as described herein.

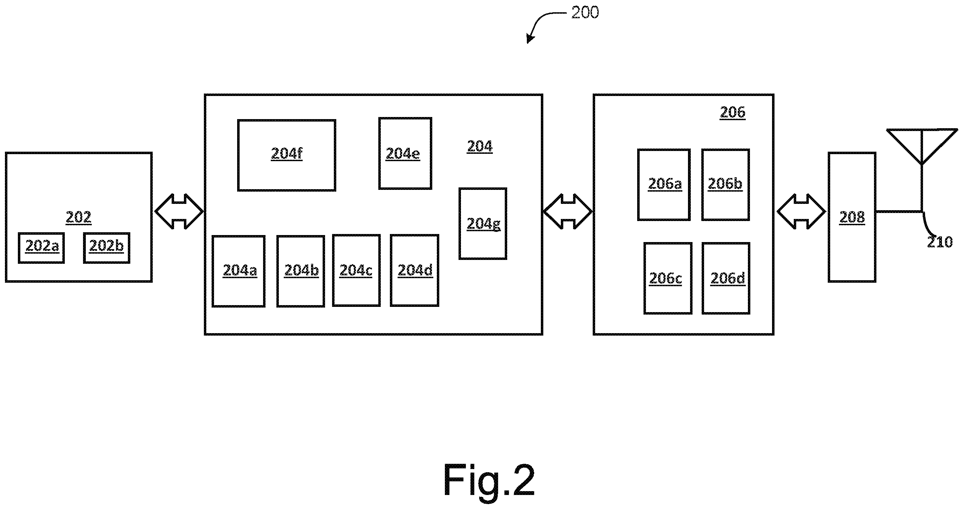

FIG. 2 illustrates, for one embodiment, example components of an electronic device 200. In various embodiments, the electronic device 200 may implemented in or by UE 105 and/or an eNB 110 as described previously with regard to FIG. 1. In some embodiments, the electronic device 200 may include application circuitry 202, baseband circuitry 204, radio frequency (RF) circuitry 206, front-end module (FEM) circuitry 208 and one or more antennas 210, coupled together at least as shown. In embodiments where the electronic device 200 is implemented in or by an eNB 110, the electronic device 200 may also include network interface circuitry (not shown) for communicating over a wired interface (for example, an X2 interface, an S1 interface, and the like).

The application circuitry 202 may include one or more application processors. For example, the application circuitry 202 may include circuitry such as, but not limited to, one or more single-core or multi-core processors 202a. The processor(s) 202a may include any combination of general-purpose processors and dedicated processors (e.g., graphics processors, application processors, etc.). The processors 202a may be coupled with and/or may include memory/storage 202b (also referred to as "memory 202b" or "computer-readable medium 202b") and may be configured to execute instructions stored in the memory/storage 202b to enable various applications and/or operating systems to run on the system.

The baseband circuitry 204 may include circuitry such as, but not limited to, one or more single-core or multi-core processors. The baseband circuitry 204 may include one or more baseband processors and/or control logic to process baseband signals received from a receive signal path of the RF circuitry 206 and to generate baseband signals for a transmit signal path of the RF circuitry 206. Baseband circuity 204 may interface with the application circuitry 202 for generation and processing of the baseband signals and for controlling operations of the RF circuitry 206. For example, in some embodiments, the baseband circuitry 204 may include a second generation (2G) baseband processor 204a, third generation (3G) baseband processor 204b, fourth generation (4G) baseband processor 204c, and/or other baseband processor(s) 204d for other existing generations, generations in development or to be developed in the future (e.g., fifth generation (5G), 6G, etc.). The baseband circuitry 204 (e.g., one or more of baseband processors 204a-d) may handle various radio control functions that enable communication with one or more radio networks via the RF circuitry 206. The radio control functions may include, but are not limited to, signal modulation/demodulation, encoding/decoding, radio frequency shifting, and the like. In some embodiments, modulation/demodulation circuitry of the baseband circuitry 204 may include Fast-Fourier Transform (FFT), precoding, and/or constellation mapping/demapping functionality. In some embodiments, encoding/decoding circuitry of the baseband circuitry 204 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 204 may include elements of a protocol stack such as, for example, elements of an evolved universal terrestrial radio access network (E-UTRAN) protocol including, for example, physical (PHY), media access control (MAC), radio link control (RLC), packet data convergence protocol (PDCP), and/or radio resource control (RRC) elements. A central processing unit (CPU) 204e of the baseband circuitry 204 may be configured to run elements of the protocol stack for signaling of the PHY, MAC, RLC, PDCP and/or RRC layers. In some embodiments, the baseband circuitry may include one or more audio digital signal processor(s) (DSP) 204f. The audio DSP(s) 204f may include elements for compression/decompression and echo cancellation and may include other suitable processing elements in other embodiments. The baseband circuitry 204 may further include memory/storage 204g (also referred to as "memory 204g" or "computer-readable medium 204g"). The memory/storage 204g may be used to load and store data and/or instructions for operations performed by the processors of the baseband circuitry 204. Memory/storage for one embodiment may include any combination of suitable volatile memory and/or non-volatile memory. The memory/storage 204g may include any combination of various levels of memory/storage including, but not limited to, read-only memory (ROM) having embedded software instructions (e.g., firmware), random access memory (e.g., dynamic random access memory (DRAM)), cache, buffers, etc. The memory/storage 204g may be shared among the various processors or dedicated to particular processors. Components of the baseband circuitry 204 may be suitably combined in a single chip, a single chipset, or disposed on a same circuit board in some embodiments. In some embodiments, some or all of the constituent components of the baseband circuitry 204 and the application circuitry 202 may be implemented together, such as, for example, on a system on a chip (SOC).

In some embodiments, the baseband circuitry 204 may provide for communication compatible with one or more radio technologies. For example, in some embodiments, the baseband circuitry 204 may support communication with an E-UTRAN and/or other wireless metropolitan area networks (WMAN), a wireless local area network (WLAN), a wireless personal area network (WPAN). Embodiments in which the baseband circuitry 204 is configured to support radio communications of more than one wireless protocol may be referred to as multi-mode baseband circuitry.

RF circuitry 206 may enable communication with wireless networks using modulated electromagnetic radiation through a non-solid medium. In various embodiments, the RF circuitry 206 may include switches, filters, amplifiers, etc., to facilitate the communication with the wireless network. RF circuitry 206 may include a receive signal path that may include circuitry to down-convert RF signals received from the FEM circuitry 208 and provide baseband signals to the baseband circuitry 204. RF circuitry 206 may also include a transmit signal path that may include circuitry to up-convert baseband signals provided by the baseband circuitry 204 and provide RF output signals to the FEM circuitry 208 for transmission.

In some embodiments, the RF circuitry 206 may include a receive signal path and a transmit signal path. The receive signal path of the RF circuitry 206 may include mixer circuitry 206a, amplifier circuitry 206b and filter circuitry 206c. The transmit signal path of the RF circuitry 206 may include filter circuitry 206c and mixer circuitry 206a. RF circuitry 206 may also include synthesizer circuitry 206d for synthesizing a frequency for use by the mixer circuitry 206a of the receive signal path and the transmit signal path. In some embodiments, the mixer circuitry 206a of the receive signal path may be configured to down-convert RF signals received from the FEM circuitry 208 based on the synthesized frequency provided by synthesizer circuitry 206d. The amplifier circuitry 206b may be configured to amplify the down-converted signals and the filter circuitry 206c may be a low-pass filter (LPF) or band-pass filter (BPF) configured to remove unwanted signals from the down-converted signals to generate output baseband signals. Output baseband signals may be provided to the baseband circuitry 204 for further processing. In some embodiments, the output baseband signals may be zero-frequency baseband signals, although this is not a requirement. In some embodiments, mixer circuitry 206a of the receive signal path may comprise passive mixers, although the scope of the embodiments is not limited in this respect.

In some embodiments, the mixer circuitry 206a of the transmit signal path may be configured to up-convert input baseband signals based on the synthesized frequency provided by the synthesizer circuitry 206d to generate RF output signals for the FEM circuitry 208. The baseband signals may be provided by the baseband circuitry 204 and may be filtered by filter circuitry 206c. The filter circuitry 206c may include a low-pass filter (LPF), although the scope of the embodiments is not limited in this respect.

In some embodiments, the mixer circuitry 206a of the receive signal path and the mixer circuitry 206a of the transmit signal path may include two or more mixers and may be arranged for quadrature downconversion and/or upconversion, respectively. In some embodiments, the mixer circuitry 206a of the receive signal path and the mixer circuitry 206a of the transmit signal path may include two or more mixers and may be arranged for image rejection (e.g.. Hartley image rejection). In some embodiments, the mixer circuitry 206a of the receive signal path and the mixer circuitry 206a of the transmit signal path may be arranged for direct downconversion and/or direct upconversion, respectively. In some embodiments, the mixer circuitry 206a of the receive signal path and the mixer circuitry 206a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 206 may include analog-to-digital converter (ADC) and digital-to-analog converter (DAC) circuitry and the baseband circuitry 204 may include a digital baseband interface to communicate with the RF circuitry 206.

In some non-claimed dual-mode embodiments, a separate radio IC circuitry may be provided for processing signals for each spectrum, although the scope of the embodiments is not limited in this respect.

In some embodiments, the synthesizer circuitry 206d may be a fractional-N synthesizer or a fractional N/N+1 synthesizer, although the scope of the embodiments is not limited in this respect, as other types of frequency synthesizers may be suitable. For example, synthesizer circuitry 206d may be a delta-sigma synthesizer, a frequency multiplier, or a synthesizer comprising a phase-locked loop with a frequency divider. The synthesizer circuitry 206d may be configured to synthesize an output frequency for use by the mixer circuitry 206a of the RF circuitry 206 based on a frequency input and a divider control input. In some embodiments, the synthesizer circuitry 206d may be a fractional N/N+1 synthesizer.

In some embodiments, frequency input may be provided by a voltage controlled oscillator (VCO), although that is not a requirement. Divider control input may be provided by either the baseband circuitry 204 or the application circuitry 202 depending on the desired output frequency. In some embodiments, a divider control input (e.g., N) may be determined from a look-up table based on a channel indicated by the application circuitry 202.

Synthesizer circuitry 206d of the RF circuitry 206 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 206d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 206 may include an IQ/polar converter.

FEM circuitry 208 may include a receive signal path that may include circuitry configured to operate on RF signals received from one or more antennas 210, amplify the received signals and provide the amplified versions of the received signals to the RF circuitry 206 for further processing. FEM circuitry 208 may also include a transmit signal path that may include circuitry configured to amplify signals for transmission provided by the RF circuitry 206 for transmission by one or more of the one or more antennas 210. In some embodiments, the FEM circuitry 208 may include a TX/RX switch to switch between transmit mode and receive mode operation. The FEM circuitry 208 may include a receive signal path and a transmit signal path. The receive signal path of the FEM circuitry may include a low-noise amplifier (LNA) to amplify received RF signals and provide the amplified received RF signals as an output (e.g., to the RF circuitry 206). The transmit signal path of the FEM circuitry 208 may include a power amplifier (PA) to amplify input RF signals (e.g., provided by RF circuitry 206), and one or more filters to generate RF signals for subsequent transmission (e.g., by one or more of the one or more antennas 210).

In some embodiments, the electronic device 200 may include additional elements such as, for example, memory/storage, display, camera, sensor, and/or interface circuitry (for example, input/output (I/O) interfaces or buses) (not shown). In embodiments where the electronic device is implemented in or by an eNB 110, the electronic device may include network interface circuitry. The network interface circuitry may be one or more computer hardware components that connect electronic device 200 to one or more network elements, such as one or more servers within the CN 140 or another eNB 110, via a wired connection. To this end, the network interface circuitry may include one or more dedicated processors and/or FPGAs to communicate using one or more wired communications protocol. The wired communications protocols may include a serial communications protocol (e.g., the Universal Serial Bus (USB), FireWire, Serial Digital Interface (SDI), and/or other like serial communications protocols), a parallel communications protocol (e.g., IEEE 1284, Computer Automated Measurement And Control (CAMAC), and/or other like parallel communications protocols), and/or a network communications protocol (e.g., Ethernet, token ring, Fiber Distributed Data Interface (FDDI), and/or other like network communications protocols). The network interface circuitry may also include one or more virtual network interfaces configured to operate with iUICC proxy 110 and/or other like applications.

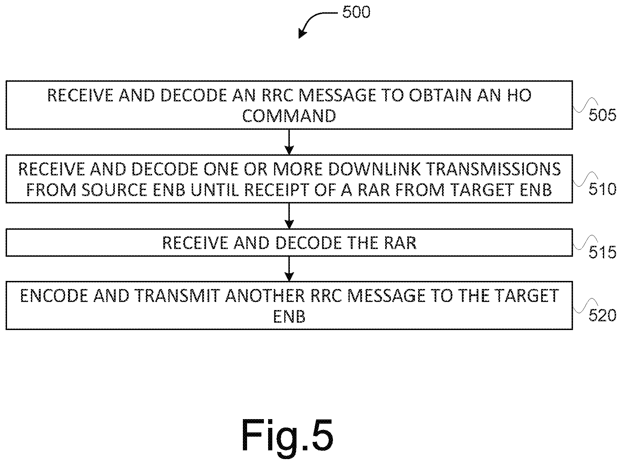

In embodiments where the electronic device 200 is a UE 105 or is incorporated into or otherwise part of a UE 105, the baseband circuitry 204 (or processor circuitry) may receive and decode a RRC message from a source eNB. In embodiments, the baseband circuitry 204 or processor circuitry may include decoding circuitry, which may decode the RRC message. This RRC message may be an RRC Connection Reconfiguration message. The RRC Connection Reconfiguration message may be an HO command that identifies a target eNB for an HO operation. The baseband circuitry 204 (or the decoding circuitry of the processor circuitry) may receive and decode one or more downlink transmissions from the source eNB after receipt of the HO command and until receipt of a Random Access Response (RAR) from the target eNB. The baseband circuitry 204 (or the decoding circuitry of the processor circuitry) may receive and decode the RAR from the target eNB. The baseband circuitry 204 may encode another RRC message for transmission to the target eNB. The other RRC message may be an RRC Connection Reconfiguration Complete message. The RRC Connection Reconfiguration message may indicate completion of the HO operation indicated by the HO command. In embodiments, the baseband circuitry 204 or processor circuitry may include encoding circuitry, which may encode the other RRC message. Furthermore, the baseband circuitry 204 may be configured to perform the processes described herein (or parts thereof), such as processes 500-700 described with respect to FIGS. 5-7.

In embodiments where the electronic device 200 is an eNB 110 or is incorporated into or otherwise part of an eNB 110, the baseband circuitry 204 (or processor circuitry) may control receipt of an HO request from a source eNB, wherein the HO request is to indicate an HO operation to occur between a UE and the eNB; receive a first copy of data packets from the source eNB, wherein a second copy of the data packets are to be provided to the UE during the HO operation; and establish a connection with the UE. Furthermore, the baseband circuitry 204 (or processor circuitry) may be configured to perform the processes, or parts thereof, as described herein.

In other embodiments where the electronic device 200 is an eNB 110 or is incorporated into or otherwise part of an eNB 110, the baseband circuitry 204 (or processor circuitry) may control transmission of an HO command to the UE based on a determination that the UE should perform an HO operation with a target eNB; control transmission of one or more data packets to the UE after transmission of the HO command; control receipt of an HO complete message from the target eNB; and terminate transmission of the one or more data packets to the UE in response to receipt of the HO complete message. Furthermore, the baseband circuitry 204 (or processor circuitry) may be configured to perform the processes, or parts thereof, as described herein.

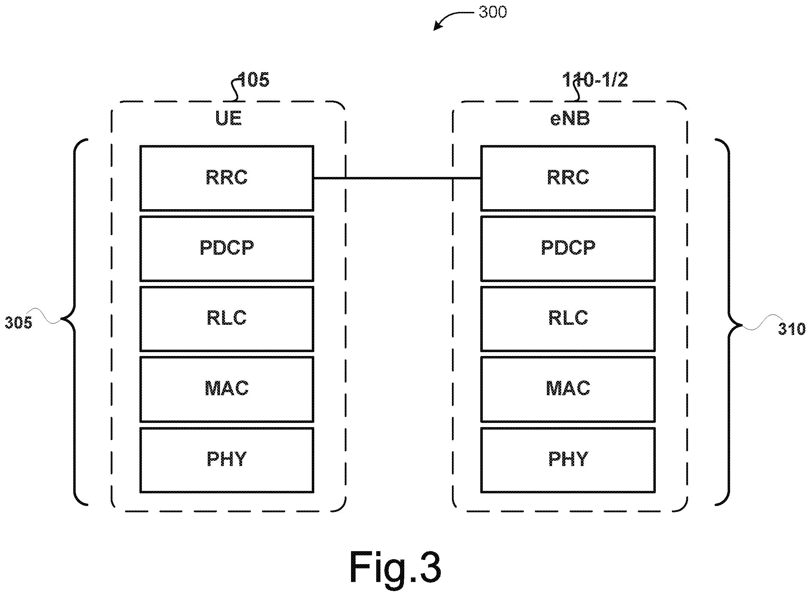

FIG. 3 illustrates example interface scheme 300 between elements of a cellular communications network 100, in accordance with various embodiments. As shown, the UE 105 includes a protocol stack 305 and eNBs 110-1 and 110-2 may include a protocol stack 310. Each of the protocol stacks 305-310 include a Radio Resource Control (RRC) entity or layer, a Packet Data Convergence Protocol (PDCP) entity/layer, a Radio Link Control (RLC) entity/layer, a Medium Access Control (MAC) entity/layer, and Physical layer (PHY) entity/layer. The protocol stacks 305-310 may be used in a control plane protocol stack for establishing radio-specific functionality. In some embodiments, the protocol stacks 305-310, without the RRC entities may be used in a user plane protocol stack, which is used for communicating data between the UE 105 and the eNB 110 over an air interface, such as the LTE-Uu interface or the PC5 interface.

The main functions of the RRC entity may include RRC connection control; Inter-RAT mobility including security activation and transfer of RRC context information; measurement configuration and reporting; transfer of dedicated non-access stratum (NAS) information and non-LTE dedicated information; transfer of UE radio access capability information; support for E-UTRAN sharing (multiple PLMN identities); generic protocol error handling; support of self-configuration and self-optimisation; and support of measurement logging and reporting for network performance optimisation. The broadcast of system information may include NAS common information; cell (re-)selection parameters, neighbouring cell information and information, and common channel configuration information. RRC connection control may include, establishment/modification/release of RRC connections, initial security activation such as initial configuration of access stratum (AS) integrity protection (SRBs) and AS ciphering (SRBs, DRBs), establishment/modification/ release of resource blocks (RBs) carrying user data (DRBs); radio configuration control; RN-specific radio configuration control for the radio interface; cell management; quality of service (QoS) control; and recovery from radio link failures (RLFs).

The main functions of the PDCP layer may include header compression and decompression of Internet Protocol (IP) data flows using the Robust Header Compression (ROHC) protocol; transfer of data (user plane or control plane); maintenance of PDCP sequence numbers (SNs); in-sequence delivery of upper layer protocol data units (PDUs) at re-establishment of lower layers; duplicate elimination of lower layer service data units (SDUs) at re-establishment of lower layers for radio bearers mapped on the RLC layer; ciphering and deciphering of user plane data and control plane data; integrity protection and integrity verification of control plane data; integrity protection and integrity verification of user plane data for relay nodes (RNs); timer based discard; duplicate discarding; and or split bearers, routing and reordering.

The main functions of the RLC layer may include transfer of upper layer PDUs; error correction through automatic repeat request (ARQ); concatenation, segmentation and reassembly of RLC SDUs; re-segmentation of RLC data PDUs; reordering of RLC data PDUs; duplicate detection; RLC SDU discard; RLC re-establishment; and protocol error detection.

The main functions of the MAC layer may include mapping between logical channels and transport channels; multiplexing of MAC SDUs from one or different logical channels onto transport blocks (TB) to be delivered to the physical layer on transport channels; demultiplexing of MAC SDUs from one or different logical channels from transport blocks (TB) delivered from the physical layer on transport channels; scheduling information reporting; error correction through Hybrid Automatic Repeat Request (HARQ); priority handling between UEs by means of dynamic scheduling; priority handling between logical channels of one MAC entity; Logical Channel prioritisation; transport format selection; radio resource selection for sidelink connections.

The main functions of the PHY layer may include carrying information from the MAC transport channels over the air interface. Takes care of the link adaptation (AMC), power control, cell search (for initial synchronization and handover purposes) and other measurements (inside the LTE system and between systems) for the RRC layer.

Some of the functions listed above may be applicable to both the UE 105 and the eNB 110, while some of the functions may only be applicable to only the UE 105 or the eNB 110. Further, although FIG. 3 shows the LTE 105 including a single protocol stack 305, in various example embodiments, the UE 105 may generate or create multiple protocol stacks 305 for communicating with multiple eNBs 110, wherein each protocol stack 305 includes a corresponding RRC entity, PDCP entity, RLC entity, MAC entity, and PHY entity.

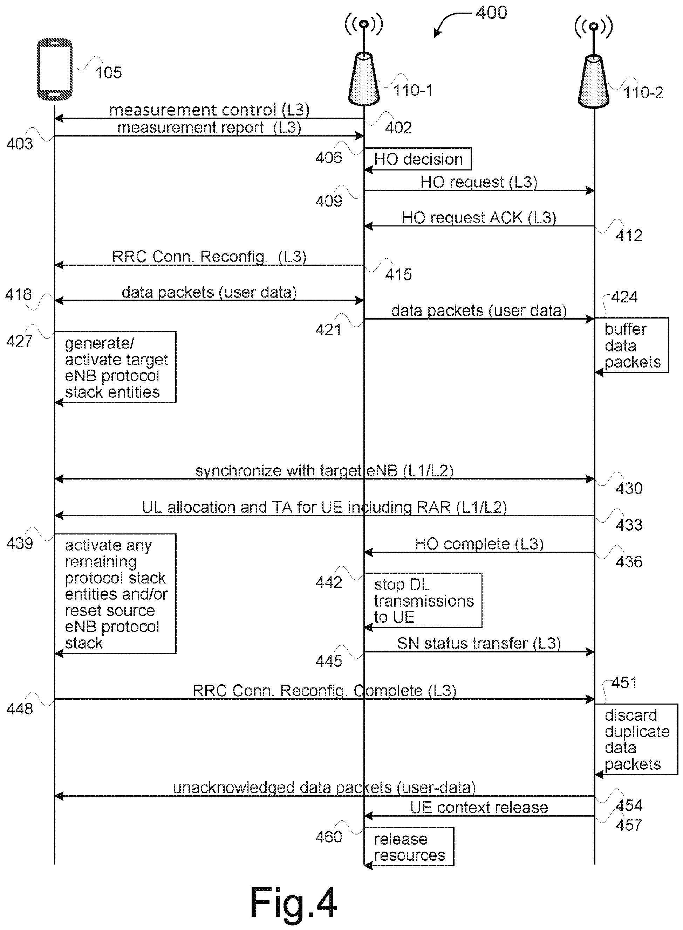

FIG. 4 illustrates a process 400 for performing an HO operation performed by various elements of the cellular communications network 100 of FIG. 1 using the interface scheme 300 of FIG. 3. For illustrative purposes, the operations of process 400 will be described as being performed by the UE 105, the eNB 110-1 acting as a source eNB or source cell, and the eNB 110-2 acting as a target eNB or target cell. While particular examples and orders of operations are illustrated in FIG. 4, in various embodiments, these operations may be re-ordered, broken into additional operations, combined, and/or omitted altogether. In some embodiments, the operations illustrated in FIG. 4 may be combined with operations described with regard to other embodiments, such as those illustrated by one or more of FIGS. 5-7 and/or one or more operations described with regard to the non-limiting examples provided herein.

Referring to FIG. 4, at operation 402, UE 105 may receive a measurement control message from the source eNB 110-1, and at operation 403, the UE 105 may provide a measurement report to source eNB 110-1. The measurement control message and the measurement report may be signaled using layer 3 (L3) signaling, for example, RRC layer or non-access stratum (NAS) layer signaling. In embodiments, the measurement control message may be based on a configuration measurement provided by an RRC entity of the source eNB 110-1. The configuration message may instruct the UE 105 to configure itself to perform one or more carrier frequency measurements for one or more listed cells. Such measurements may include intra-frequency measurements (for example, measurements of one or more downlink carrier frequency(ies) of the serving cell(s)), inter-frequency (for example, measurements of one or more carrier frequencies that differ from any of the downlink carrier frequency(ies) of the serving cell(s)), and/or inter-radio access technology (RAT) measurements (for example, measurements of UTRA frequencies, GERAN frequencies, and/or CDMA2000 frequencies). This configuration may be done during an initial RRC connection establishment procedure with the source eNB 110-1. The measurements to be taken may include reception-transmission time difference measurements, Received Signal Strength Indicator (RSSI) measurements, channel occupancy measurements, RSRP/RSRQ measurements, Signal-to-Noise Ratio (SNR) measurements, Signal-to-Interference-plus-Noise Ratio (SINR) measurements, and/or other like measurements. After the UE 105 performs these measurements, the UE 105 may generate the measurement report, and transmit the measurement report to the source eNB 110-1 at operation 403.

At operation 406, the source eNB 110-1 may make an HO decision based on the measurements in the measurement report. At operation, 409, the source eNB 110-1 may transmit an HO request to the target eNB 110-2, and at operation 412, the target eNB 110-2 may transmit an HO request acknowledgement (ACK) to the source eNB 110-1. The HO request and the HO request ACK may be communicated using L3 signaling, for example, using X2 signaling when a direct connection between the source eNB 110-1 and the target eNB 110-2 is available. At operation 415, the source eNB 110-1 may transmit an RRC Connection Reconfiguration message to the UE 105. The RRC Connection Reconfiguration message may be an HO command, which instructs the UE 105 to perform an HO operation with the target eNB 110-2. In some embodiments, the UE 105 may have obtained a system information block (SIB) type 2 (also referred to as "SIB2") from the source eNB 110-1. The SIB2 may comprise radio resource configuration information that may be used by the UE 105. For example, the SIB2 may include a RadioResourceConfigCommonSIB information element (IE) and a rach-ConfigCommon IE that indicate a Random Access Channel (RACH) preamble assignment; a random access response (RAR) window size that indicates a number of subframes to be monitored for the RAR, access parameters, and/or other like information. In embodiments, the RRC Connection Reconfiguration message may indicate communications resources from the target eNB 110-2 that are available for the UE 105, a Cell Radio Network Temporary Identifier (C-RNTI) associated with the target eNB 110-2, a selected security algorithm to use for encrypting/decrypting messages; and/or other like information. The aforementioned information indicated by the SIB2 and the RRC Connection Reconfiguration message may be used by the UE 105 to synchronize with the target eNB 110-2 during the HO operation. Additionally, at least some of the information indicated by the RRC Connection Reconfiguration message may be information that was contained in the HO request ACK message.

Furthermore, in embodiments where the RRC Connection Reconfiguration message is the HO command, the RRC Connection Reconfiguration message may include a mobility control information IE (also referred to as "mobilityControlInformation" or "mobilityControlInfo"). The mobilityControlInfo IE may indicate a value for an HO timer, such as timer T304. Expiration of the timer T304 may indicate an HO failure, and the UE 105 may revert back to a configuration used in the source cell 110-1, and/or store handover failure information (such as, RSRP and/or RSRQ measurements, location information, a horizontal velocity, and the like) for reporting. The mobilityControlInfo IE may also include other information that the UE 105 may use for performing the HO operation.

After providing the HO command to the UE 105, the source eNB 110-1 at operation 418 may continue to provide one or more downlink transmissions (data packets) to the UE 105 while the UE 105 performs the HO operation with the target eNB 110-2. The data packets may be transmitted to the UE 105 over the user-plane. In some embodiments, the UE 105 may continue to provide user data to the source eNB 110-1. Furthermore, the UE 105 may begin to synchronize with the target eNB 110-2 while the UE 105 continues to receive downlink transmissions from the source eNB 110-1. At operation 421 the source eNB 110-1 may provide copies of the data packets to the target eNB 110-2, which may be referred to as a packet forwarding operation. The packet forwarding operation may take place directly from source eNB 110-1 to target eNB 110-2 (for example, over the X2 interface). At operation 424, the target eNB 110-2 may buffer the data packets.

Meanwhile, at operation 427, the UE 105 may generate a protocol stack for communicating with the target eNB 110-2 (also referred to as a "target protocol stack," "target eNB protocol stack," and the like) and/or activate at least one target protocol stack entity for communicating with the target eNB 110-2. In embodiments, the UE 105 may maintain (or not reset) the source protocol stack while generating/creating the target protocol stack.

In some embodiments, the UE 105 may support Dual Connectivity (DC) whereby the UE 105 is configured to utilize radio resources provided by two distinct eNBs (for example, the source eNB 110-1 and another eNB 110 that is not shown by FIG. 1) connected via a backhaul connection (for example, an X2 interface). In such embodiments, the each eNB 110 may be a master eNB (MeNB) associated with a Master Cell Group (MCG) or a secondary eNB (SeNB) associated with a Secondary Cell Group (SCG). The MCG may include a Primary Cell (PCell) and one or more Secondary Cells (SCells), and the SCG may include a primary secondary cell (PSCell) and one or more SCells. In such embodiments, the UE 105 should have already established an MCG protocol stack for communicating with the source eNB 110-1 acting as a MeNB and an SCG protocol stack for communicating with an SeNB 110. In some embodiments, at operation 427 the UE 105 may release a connection with the SCG by reseting the SCG protocol stack, while maintaining a connection with the MCG by maintaining the MCG protocol stack until completion of the HO operation. In other embodiments, at operation 427 the UE 105 may maintain both the MCG connection and the SCG connection by maintaining the MCG protocol stack and the SCG protocol stack. In such embodiments, the MCG protocol stack and the SCG protocol stack may be reset only after the HO operation is complete (for example, when the RRC Connection Reconfiguration message is sent at operation 448). In various embodiments, the MCG protocol stack and the SCG protocol stack may be reset after any remaining target eNB protocol stack entities are activated and/or after the source eNB protocol stack is reset operation is complete (for example, at operation 439). However, it should be noted that in other embodiments, the features discussed herein may not apply to UEs configured for DC, and in such cases the UE 105 may be configured to not receive downlink transmissions from the source eNB 110-1 during the HO operation when DC is configured. In such embodiments, the source eNB 110-1 may configure the UE 105 to not receive downlink transmissions during the HO operation using the RRC Connection Reconfiguration message.

At operation 430, the UE 105 performs a cell synchronization procedure with the target eNB 110-2, which may include layer 1 (L1) and/or layer 2 (L2) signaling between the UE 105 and the target eNB 110-2, for example RRC, MAC, and/or PHY signaling. The cell synchronization procedure may include, for example, locating a primary synchronization signal (PSS) and a secondary synchronization signal (SSS) to obtain a physical cell identifier (PCI) of the target eNB 110-2, using the PCI to locate one or more reference signals (RSs) to perform channel estimation, and reading a master information block (MIB) and one or more system information blocks (SIBs) associated with the target eNB 110-2. The synchronization operation may also include performing a RACH procedure, which may include the UE 105 generating and transmitting a RACH Request (also referred to as a "Random Access Preamble" message or an "RA Preamble" message) to the target eNB 110-2. In some embodiments, the RACH Request may trigger the target eNB 110-2 to generate and/or activate a MAC entity for communicating with the UE 105.

After synchronization with the target eNB 110-2, at operation 433 the target eNB 110-2 may provide the UE 105 with an uplink (UL) allocation and a timing advance (TA), which may include a RA Response (RAR). The UL allocation, TA, and RAR may be provided to the UE 105 using L1/L2 signaling. In embodiments, the RAR may be transmitted during an RAR window, which may start at a subframe that contains the end of the preamble transmission plus three subframes and has length of subframes indicated by the RAR window size. In response to receipt of the RAR, at operation 439 the UE 105 activates the PDCP entity and the RLC entity in the target protocol stack (if this was not done at operation 427), and resets the source protocol stack. In some embodiments, the PDCP entity and the RLC entity may have been activated at operation 427, and in such embodiments, operation 439 may only include resetting the source eNB protocol stack.

Meanwhile, the target eNB 110-2 transmits an HO complete message to the source eNB 110-2. The HO complete message may be communicated to the source eNB 110-1 using L3 signaling. In response to receipt of the HO complete message, at operation 442 the source eNB 110-1 terminates downlink (DL) transmissions to the UE 105, and at operation 445 the source eNB 110-1 transmits an SN status transfer message to the target eNB 110-2 using L3 signaling.

At operation 448, the UE 105 transmits an RRC Connection Reconfiguration Complete message to the target eNB 110-2. In embodiments, the RRC Connection Reconfiguration Complete message may include a PDCP status report, which may indicate data packets that were not properly received or properly decompressed during the HO operation. For example, the PDCP status report may indicate data packets that were intended to be delivered to the UE 105 at operation 418. Data packets that are not properly received and/or properly decompressed by the UE 105 may be referred to as "unacknowledged data packets."

At operation 451, the target eNB 110-2 may discard any duplicate packets that were properly received and/or properly decompressed by the UE 105, and at operation 454, the target eNB 110-2 may transmit unacknowledged data packets to the UE 105, which were buffered at operation 424.

Meanwhile, the target eNB 110-2 and source eNB 110-1 may perform various HO-related operations with one or more core network elements (not shown by FIG. 4). These operations may include the target eNB 110-2 providing copies of the data packets to an SGW over the user-plane, and transmitting a path switch request to an MME using L3 signaling. In response to the path switch request, the MME may transmit a modify bearer request to the SGW using L3 signaling. In response to the modify bearer request, the SGW may switch a downlink path associated with the UE 105, provide an end marker to the source eNB 110-1 over the user-plane, and provide a modify bearer response to the MME. The target eNB 110-2 may receive, from the MME using L3 signaling, a path switch request ACK based on the modify bearer response. In response to the path switch request ACK, at operation 457 the target eNB 110-2 may transmit a UE context release message to the source eNB 110-1. At operation 460, the source eNB 110-1 may release and reallocate resources that were previously allocated to the UE 105 in response to the UE context release message.

FIGS. 5-7 illustrate processes 500-700, respectively, which may be performed by the UE 105 to receive downlink transmissions during a handover operation, in accordance with a first type of example embodiments. In some embodiments, the UE 105 may include one or more non-transitory computer-readable media having instructions, stored thereon, that when executed by the UE 105, cause the UE 105 to perform the one or more of processes 500-700. For illustrative purposes, the operations of processes 500-700 are described as being performed by the UE 105 or components/protocol stack entities of the UE 105, which are described with respect to FIGS. 1-3. However, it should be noted that other similar devices/entities may operate the processes 500-700. While particular examples and orders of operations are illustrated in FIGS. 5-7, in various embodiments, these operations may be re-ordered, broken into additional operations, combined, and/or omitted altogether. In some embodiments, the operations illustrated in one of FIGS. 5-7 may be combined with operations described with regard to other example embodiments and/or one or more operations described with regard to the non-limiting examples provided herein.

FIG. 5 illustrates a process 500 that may be performed by a UE 105 to receive downlink transmissions during a handover operation, in accordance with various example embodiments. At operation 505, the processor circuitry of the UE 105 may receive and decode an RRC message (also referred to as a "first RRC message") to obtain an HO command. In embodiments, the RF circuitry 206 may receive RF signaling from the source eNB 110-1, and the RF circuitry 206 may be pass the data representative of the RF signaling to processor circuitry of the UE 105 via interface circuitry of the UE 105. The processor circuitry of the UE 105 may detect the RRC message and/or the HO command based on the received signaling. In various embodiments, this RRC message may be an RRC Connection Reconfiguration message. In embodiments, the RRC Connection Reconfiguration message may also include the mobilityControlInfo IE. Operation 505 may be performed at operation 415 in the example embodiment shown and described with regard to FIG. 4.

After obtaining the HO command, at operation 510 the processor circuitry of the UE 105 may receive and decode one or more downlink transmissions from the source eNB 110-1 until receipt of a RAR from the target eNB 110-2. In some embodiments, to perform operation 515, the processor circuitry may implement an RRC entity to provide an RRC Connection Reconfiguration Complete message to a MAC entity. Passing the RRC Connection Reconfiguration Complete message to the MAC entity may trigger the MAC entity to initiate a RACH procedure. To perform the RACH procedure, the processor circuitry implementing the MAC entity may determine one or more subframes and an available set of physical RACH (PRACH) resources for the transmission of a RACH request to the target eNB 110-2. The MAC entity may also determine an RA preamble index, an RA Radio Network Temporary Identity (RA-RNTI), and an amount of power to be used for transmitting the RACH request. The MAC entity may then generate the RACH request including the RA preamble index, the RA-RNTI, and the preamble transmission power. These operations may be performed at operations 418-430 shown and described with regard to FIG. 4.

In response to the RACH request, at operation 515 the processor circuitry of the UE 105 may receive and decode the RAR from the target eNB 110-2. When the RA request message is received by the target eNB 110-2, the target eNB 110-2 may generate a RACH response (also referred to as a "Random Access Response" or "RAR") indicating a temporary RNTI allocated to the UE 105, a timing advance (TA) for uplink (UL) transmissions, and an UL grant indicating an allocation of UL resources for the UE 105 to transmit data to the target eNB 110-2. The target eNB 110-2 may then transmit the RAR to the UE 105. These operations may correspond to operation 433 shown and described with regard to FIG. 4.

In embodiments where the UE 105 is capable of simultaneous reception and there is backhaul coordination and/or synchronization between the eNBs 110 (for example, when the eNBs 110 are owned or controlled by the same network operator), the UE 105 may be able to receive the RAR from the target eNB 110-2 at the same time as one or more downlink transmissions from source eNB 110-1. In some embodiments, the one or both eNBs 110 may use frequency domain interference coordination such that the downlink transmissions from the source eNB 110-1 are transmitted using different frequency resources during the RAR window. In this way, the RAR may be received by the UE 105 using different frequency resources than the downlink transmissions. Alternatively, in embodiments where UE 105 is capable of processing at least two Fast Fourier Transform (FFT) windows, one or more entities of the CN 140 (or one of the eNBs 110) may coordinate the source eNB 110-1 and the target eNB 110-2 to not use the same frequency resources. An FFT window may be a time period in which the processor circuitry of the UE 105 may demodulate one or more OFDM symbols by performing an FFT operation to obtain a data stream. In such embodiments, the UE 105 may provide capability information to a CN entity indicating that the UE 105 is capable of processing at least two FFT windows, and based on such an indication, the one or more CN entities (or one of the eNBs 110) may perform frequency domain interference coordination for the UE 105 to receive the downlink transmissions and the RAR simultaneously. In various embodiments, the capability information may be provided to the CN 140 by way of the source eNB 110-1 during an RRC connection procedure with the source eNB 110-1. For example, the UE 105 may receive a UE capability Enquiry message from the source eNB 110-1 after an RRC connection has been established with the source eNB 110-1. In response to a UE capability Enquiry message, the UE 105 may provide a UE Capability Information message including a capability information IE to the source eNB 110-1. The indication indicating that the UE is capable of processing at least two FFT windows may be included in the capability information IE or in some other portion of the UE Capability Information message.

In embodiments where the UE 105 is capable of simultaneous reception but there is little to no backhaul coordination and/or synchronization between the eNBs 110 (for example, when the eNBs 110 are owned or controlled by different network operators), the UE 105 may receive the RAR from the target eNB 110-2 and the one or more downlink transmissions from source eNB 110-1 at different times. In embodiments, the UE 105 may use Time Division Multiplexing (TDM) switching after the RA request is sent. In some embodiments, the TDM switching may be used during the RAR window. TDM switching may define a pattern for switching between receiving transmissions from two or more different transmission points. For example, the pattern may define when the RF circuitry 206 should switch between receiving the one or more downlink transmissions from the source eNB 110-1 and receiving the RAR from the target eNB 110-2. In such embodiments, receipt of the RAR may be prioritized over reception of the downlink data transmissions from the source eNB 110-1 during the RAR window.

Referring back to FIG. 5, at operation 520, the processor circuitry of the UE 105 may encode and transmit another RRC message (also referred to as a "second RRC message") to the target eNB 110-2. In embodiments, the other RRC message may be an RRC Connection Reconfiguration Complete message.

In some embodiments, the other RRC message (for example, the RRC Connection Reconfiguration Complete message) may include a PDCP status report. The PDCP status report may be used to notify the target eNB 110-2 of any data packets that may have been lost due to the PDCP and/or RLC re-establishment procedures. The PDCP status report may indicate any PDCP SDUs that are missing after the PDCP re-establishment procedure. The PDCP status report may include a bitmap with a field of length in bits equal to the number of PDCP SNs. Fields in the bitmap may include a '0' value in a corresponding position in the bitmap field for all PDCP SDUs that have not been received as indicated by lower layers, and optionally any PDCP SDUs for which decompression has failed. A value of '1' in the bitmap fields may indicate properly received and/or properly decompresses PDCP SDUs. Operation 520 may be performed at operation 448 shown and described with regard to FIG. 4. The target eNB 110-2 may transmit data packets indicated by the PDCP status report as being missing or improperly decompressed to the UE 105. In embodiments, the target eNB 110-2 may discard or delete data packets indicated by the PDCP status report as being properly received and/or properly decompressed. Furthermore, in various embodiment, the UE 105 may discard or delete data packets (for example, PDCP packets) received from the target eNB 110-2 that are determined to be duplicates of data packets (for example, PDCP packets) received from the source eNB 110-1 during the HO operation. Such operations may be performed at operations 451-454 as shown and described with regard to FIG. 4.

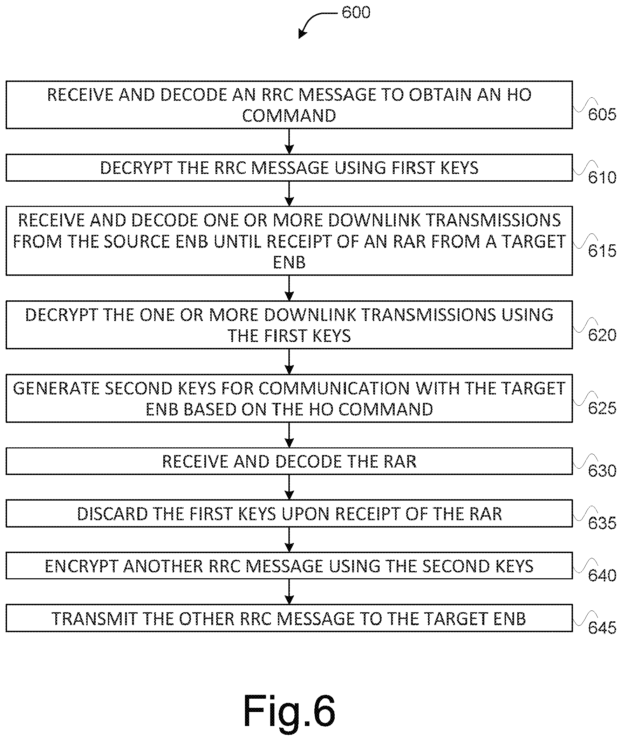

FIG. 6 illustrates a process 600 that may be performed by a UE 105 to receive downlink transmissions during a handover operation according to various example embodiments. At operation 605 processor circuitry of the UE 105 receives and decodes an RRC message (also referred to as a "first RRC message") to obtain an HO command. In various embodiments, the HO command may be included in an RRC Connection Reconfiguration message from the from source eNB 110-1, which may also include the mobilityControlInfo IE. Operation 605 may be the same or similar to operation 505 discussed with regard to FIG. 5. Operation 605 may be performed at operation 415 in the example embodiment shown and described with regard to FIG. 4.

At operation 610, the processor circuitry of the UE 105 uses a first key to decrypt the RRC message. In embodiments, the first key may have been generated in accordance with an Authentication and Key Agreement (AKA) procedure during an attachment procedure with the source eNB 110-1. The RRC entity of the UE 105 may handle configuration of security parameters as part of the NAS and AS configuration. The security parameters may include an integrity protection algorithm and a ciphering algorithm, which are used by the UE 105 to determine AS security keys during the HO operation and/or connection (re-)establishment.

For example, an MME within CN 140 may generate NAS keys, including a NAS integrity key (IK-NAS) and a NAS encryption key (eK-NAS), and may transmit a NAS security mode command to the UE 105, which includes ciphering and integrity algorithms to be used for deriving keys for encoding NAS messages. In embodiments, a Universal Integrated Circuit Card (UICC) or embedded UICC (eUICC) of the UE 105 may generate/derive the IK-NAS and the eK-NAS using the ciphering and integrity algorithms in the NAS security mode command. The processor circuitry may generate and control transmission of a NAS security mode setup complete message to the MME, which is encrypted and integrity protected using the generated IK-NAS and CK-NAS. Additionally, the MME may derive an eNB key (K-eNB) for the source eNB 110-1, and the MME may provide the source eNB 110-1 with the K-eNB in an Attach Accept message encapsulated in an Initial Context Setup Request message. The Attach Accept message may be a response to the Attach Request message discussed previously. The processor circuitry of the source eNB 110-1 may generate AS security keys from the K-eNB for encrypting/decrypting messages RRC messages and user traffic to/from the UE 105. The AS security keys may include an RRC integrity key (IK-RRC), an RRC ciphering key (CK-RRC), and a key for ciphering user traffic (uK). The processor circuitry of the source eNB 110-1 may transmit an AS security mode command to the UE 105, which includes ciphering and integrity algorithms to be used for encoding RRC messages. The UICC/eUICC may generate/derive the CK-RRC, IK-RRC, and uK using the ciphering and integrity algorithms in the AS security mode command. The processor circuitry of the UE 105 may generate and control transmission of an AS security mode setup complete message to the source eNB-110-1, which is encrypted and integrity protected using the generated IK-RRC and CK-RRC. The UE 105 and the source eNB 110-1 may derive the NAS and AS keys using a key derivation function as delineated by current LTE standards, such as Third Generation Partnership Project (3GPP) technical specification (TS) 33.401, version 13.2.0 (2016-03).

Referring back to FIG. 6, at operation 615 the processor circuitry of UE 105 receives and decodes one or more downlink transmissions from the source eNB 110-1 after obtaining the HO command and until receipt of an RAR from the target eNB 110-2. Operation 615 may be the same or similar to operation 510 shown and described with regard to FIG. 5. At operation 620, the processor circuitry of the LTE 105 may use the first key to decrypt the one or more downlink transmissions. Operations 610-620 may be performed from operation 418 to operation 430 in the example embodiment shown and described with regard to FIG. 4.

At operation 625, the processor circuitry of the UE 105 generates a second key for encrypting messages to be transmitted to the target eNB 110-2 and decrypting messages to be received from the target eNB 110-2. The second key may be generated according to a similar AKA procedure as discussed previously. In some embodiments, the ciphering and integrity algorithms may be selected by the target eNB 110-2, while in other embodiments the UE 105 may use the same ciphering and integrity algorithms discussed at operation 610. In various embodiments, the processor circuitry of the UE 105 may maintain, manage and/or utilize the first key and the second key simultaneously during the HO operation.

For example, during an X2-based HO operation, the source eNB 110-1 may include security capabilities of the UE 105, as well as ciphering and integrity algorithms used by the source cell 110-1 in the HO request message (for example, the HO request sent at operation 409 of FIG. 4). Regardless of how the target eNB 110-2 obtains the UE security capabilities, the target eNB 110-2 may select integrity and ciphering algorithms having a highest priority from the UE security capabilities according to a locally configured list of algorithms. The chosen algorithms may be indicated to the UE 105 in the HO command if the target eNB 110-2 selects different algorithms than those selected by the source eNB 110-1. In embodiments where the target eNB 110-2 does not select ciphering/integrity algorithms, the UE 105 may not receive any selection of integrity and ciphering algorithms in the HO command. In such embodiments, the UE 105 may use the same algorithms used before receiving the HO command (for example, the ciphering and integrity algorithms discussed with regard to operation 610) to derive the second keys). In various embodiments, the second keys may be generated/derived at operation 418, 427, or 430 as shown and described with regard to FIG. 4.

In embodiments, the UE 105 uses the second keys for Signaling Radio Bearers (SRBs) to the target eNB 110-2 while still using the first keys for Data Radio Bearers (DRBs) with the source eNB 110-1. In various embodiments, the processor circuitry (or UICC/eUICC) of the UE 105 may simultaneously maintain, manage, and utilize the first key for the DRBs and the second key for the SRBs during the HO operation. For example, the UE 105 may use one or more of the first keys, for example the uK, for user data transmitted on one or more DRBs of the source eNB 110-1, wherein the one or more DRBs were established during the attachment procedure with the source eNB 110-1. Upon generating/deriving the second keys (for example, the NAS and AS keys for encrypting/decrypting communications with the target eNB 110-2 discussed previously), the UE 105 may use the second keys for SRBs of the target eNB 110-2. Additionally, the ciphering and integrity algorithms provided to the target eNB 110-2 may be used by the target eNB 110-2 to decipher and integrity verify the RRC Reestablishment Complete message (transmitted at operation 645) on SRB1. After transmission of the RRC Reestablishment Complete message (after operation 645), the UE 105 may reset the DRBs and any remaining SRBs established with the source eNB 110-1 and perform re-establishment procedures for the DRBs and the remaining SRBs for communicating with the target eNB 110-2.

At operation 630, the processor circuitry of the UE 105 may receive and decode an RAR from the target eNB 110-2. Operation 630 may be the same or similar to operation 515 shown and described with regard to FIG. 5. Additionally, in some embodiments the processor circuitry of the UE 105 may decrypt the RAR using the second keys generated/derived at operation 625. Operation 630 may be performed at operation 433 in the example embodiment shown and described with regard to FIG. 4. In some embodiments, the UE may only need to replace the old key with new key once the HO is completed. In such embodiments, after receipt of the RAR, at operation 635 the processor circuitry of the UE 105 may delete or discard the first keys, and the processor circuitry of the UE 105 may continue to use the second key for communicating with the target eNB 110-2. Furthermore, at operation 630, the processor circuitry of the UE 105 may use the second key for signaling both SRBs and DRBs with the target eNB 110-2. At operation 640, the processor circuitry of the LTE 105 may encrypt another RRC message (also referred to as a "second RRC message") using the second keys, and at operation 645, the processor circuitry of the UE 105 may control transmission of the other RRC message to the target eNB 110-2. In embodiments, the other RRC message may be the RRC Connection Reconfiguration Complete message of operation 448 in the example embodiment shown and described with regard to FIG. 4.

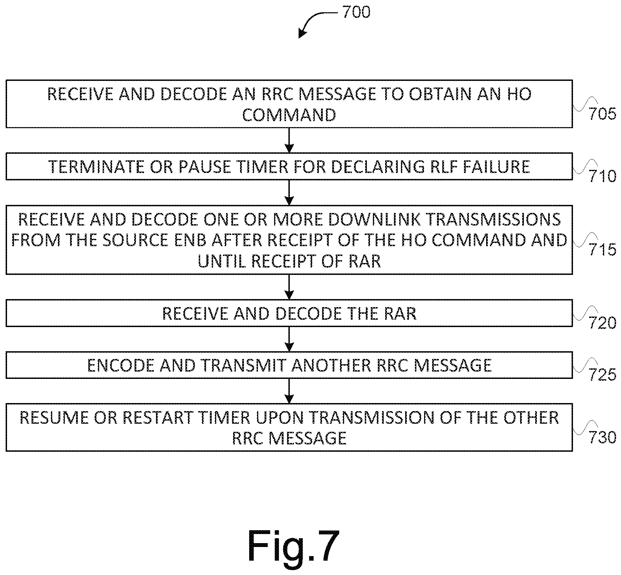

FIG. 7 illustrates a process 700 that may be performed by a UE 105 to receive downlink transmissions during a handover operation, in accordance with a second type of example embodiments. At operation 605 processor circuitry of the UE 105 may receive and decode an RRC message (also referred to as a "first RRC message") to obtain an HO command. In various embodiments, the HO command may be included in an RRC Connection Reconfiguration message from the from source eNB 110-1, which may also include the mobilityControlInfo IE. Operation 705 may be the same or similar to operation 505 discussed with regard to FIG. 5. Operation 705 may be performed at operation 415 in the example embodiment shown and described with regard to FIG. 4.

At operation 710, the processor circuitry of the UE 105 may pause or terminate a timer for declaring radio link failures (RLFs). For example, when the HO command is received, the processor circuitry of the UE 105 may start the timer T304 (also referred to as "T304") with the timer value set to a value included in the mobilityControlInfo IE, and may stop the timer T310 (also referred to as "T310") if running. Typically, expiration of the T310 may indicate an RLF failure. According to current standards, when the T310 expires, the processor circuitry of the UE 105 may enter an idle mode and/or initiate an RRC connection re-establishment procedure, which may include a cell search procedure. Additionally, expiration of the T304 may indicate an HO failure with the target eNB 110-2, and in such cases, a UE may revert back to the configuration used for communicating with a source cell. In some embodiments, the processor circuitry of the UE 105 may stop, terminate, pause, or suspend the T310 (if running) upon receipt of the HO command. In such embodiments, when the T304 elapses, the processor circuitry of the UE 105 may perform an RRC re-establishment procedure with the target eNB 110-2 and perform a cell selection procedure.

In other embodiments, the processor circuitry of the UE 105 may continue the T310 (if running) even after receipt of the HO command. In such embodiments, upon expiration of the T310, the processor circuitry of the UE 105 may stay in a connected or active mode and perform an RRC re-establishment procedure with the target eNB 110-2 without declaring RLF to perform a cell selection procedure. Furthermore, if the T304 expires prior to expiration of the T310, the processor circuitry of the UE 105 may revert back to the configurations used for communicating with the source eNB 110-1 and inform a CN entity of the HO failure using a new message or by initiating an RRC re-establishment procedure with or without the cell selection procedure. The new message or the RRC re-establishment request message may be referred to as a "third RRC message" or an "alternate RRC message." In some embodiments, the third/alternate RRC message may indicate a status of the T310 at the time of HO failure or expiration of the T304. Thereafter, the processor circuitry of the UE 105 may restart the T310, and if the T310 was suspended or paused if the T310 was terminated, the processor circuitry of the UE 105 may resume the T310 or reset the T310.

At operation 715, the processor circuitry of the UE 105 may receive and decode one or more downlink transmissions from the source eNB 110-1 until receipt of a RAR from the target eNB 110-2. Operation 715 may be the same or similar to operation 510 or operation 615 shown and described with regard to FIG. 5 and FIG. 6, respectively. At operation 720, the processor circuitry of the UE 105 may receive and decode an RAR from the target eNB 110-2. Operation 720 may be the same or similar to operation 515 or operation 630 shown and described with regard to FIG. 5 and FIG. 6, respectively. Operation 720 may be performed at operation 433 in the example embodiment shown and described with regard to FIG. 4. After receipt of the RAR, at operation 725 the processor circuitry of the UE 105 may encode another RRC message (also referred to as a "second RRC message") and control transmission of the other RRC message to the target eNB 110-2. Operation 725 may be the same or similar to operation 520 or operations 635-645 shown and described with regard to FIG. 5 and FIG. 6, respectively. In embodiments, the other RRC message may be the RRC Connection Reconfiguration Complete message of operation 448 in the example embodiment shown and described with regard to FIG. 4.

At operation 730, the processor circuitry of the UE 105 may resume or restart the timer upon (or after) transmission of the other RRC message. In embodiments, the processor circuitry may restart the T310 or resume the T310 when the T310 did not expired prior to transmission of the other RRC message.

Some non-limiting examples of changes to 3GPP TS 36.331 version 13.1.0 (2016-04) that may implement the various example embodiments are provided in the table 1 below.

| | |
|---|---|
| 5.3.5.4 Reception of an *RRCConnectionReconfiguration* including the *mobilityControlInfo* by the UE (handover) | |
| If the *RRCConnectionReconfiguration* message includes the *mobilityControlInfo* and the UE is able to comply with the configuration included in this message, the UE shall: | |
| | 1> stop timer T310, if running; |
| | 1> stop timer T312, if running; |
| | 1> start timer T304 with the timer value set to *t304*, as included in the *mobilityControlInfo*; |
| | 1> if the *carrierFreq* is included: |
| | 2> consider the target PCell to be one on the frequency indicated by the *carrierFreq* with a physical cell identity indicated by the *targetPhysCellId*; |
| | 1> else: |
| | 2> consider the target PCell to be one on the frequency of the source PCell with a physical cell identity indicated by the *targetPhysCellId*; |
| | 1> start synchronising to the DL of the target PCell; |
| | NOTE 1: The UE should perform the handover as soon as possible following the reception of the RRC message triggering the handover, which could be before confirming successful reception (HARQ and ARQ) of this message. |
| | 1> maintain mcg mac, if configured; |
| | 1> reset scg mac, if configured; |
| | NOTE 2: The handling of the radio bearers after the successful completion of the PDCP re-establishment, e.g. the re-transmission of unacknowledged PDCP SDUs (as well as the associated status reporting), the handling of the SN and the HFN, is specified in 3GPP TS 36.323 version 13.1.0 (2016-04). |
| | 1> configure lower layers to consider the SCell(s) other than the PSCell, if configured, to be in deactivated state; |
| | 1> apply the value of the *new UE-Identity* as the C-RNTI; |
| | 1> if the *RRCConnectionReconfiguration* message includes *the fullConfig*: |
| | 2> perform the radio configuration procedure as specified in section 5.3.5.8; |
| | 1> configure lower layers in accordance with the received |
| | *radioResourceConfigCommon*; |
| | 1> configure lower layers in accordance with any additional fields, not covered in the previous, if included in the received *mobilityControlInfo*; |
| | 1> if the *RRCConnectionReconfiguration* message includes the *radioResourceConfigDedicated*: |
| | 2> perform the radio resource configuration procedure as specified in 5.3.10; |
| | 1> if the *keyChangeIndicator* received in the *securityConfigHO* is set to *TRUE*: |
| | 2> generate new k_{enb-target} key based on the kₐₛₘₑ key taken into use with the latest successful nas smc procedure, as specified in 3GPP TS 33.401 version 13.2.0 (2016-03-17); |
| | 1> else: |
| | 2> generate the k_{enb-target} key based on the current k_{enb} or the nh, using the *nexthopchainingcount* value indicated in the *securityconfigho*, as specified in ts 33.401; |
| | Note X: use k_{enb} until handover complete, update k_{enb} with k_{enb-target} |
| | 1> store the *nextHopChainingCount* value; |
| | 1> if the *securityAlgorithmConfig* is included in the *securityConfigHO*: |
| | 2> derive the K_{RRCint} key associated with the *integrityProtAlgorithm*, as specified in TS 33.401; |
| | 2> if connected as an RN: |
| | 3> derive the K_{UPint} key associated with the *integrityProtAlgorithm*, as specified in TS 33.401; |
| | 2> derive the K_{RRCenc} key and the K_{UPenc} key associated with the *cipheringAlgorithm*, as specified in TS 33.401; |
| | 1> else: |
| | 2> derive the K_{RRCint} key associated with the current integrity algorithm, as specified in TS 33.401; |
| | 2> if connected as an RN: |
| | 3> derive the K_{UPint} key associated with the current integrity algorithm, as specified in TS 33.401; |
| | 2> derive the K_{RRCenc} key and the K_{UPenc} key associated with the current ciphering algorithm, as specified in TS 33.401; |
| | 1> configure lower layers to apply the integrity protection algorithm and the K_{RRCint} key, i.e. the integrity protection configuration shall be applied to all subsequent messages received and sent by the UE, including the message used to indicate the successful completion of the procedure; |
| | 1> configure lower layers to apply the ciphering algorithm, the K_{RRCenc} key and the K_{UPenc} key, i.e. the ciphering configuration shall be applied to all subsequent messages received and sent by the UE, including the message used to indicate the successful completion of the procedure; |
| | 1> if connected as an RN: |
| | 2> configure lower layers to apply the integrity protection algorithm and the K_{UPint} key, for current or subsequently established DRBs that are configured to apply integrity protection, if any; |
| | 1> if the received *RRCConnectionReconfiguration* includes the *sCellToReleaseList*: |
| | 2> perform SCell release as specified in 5.3.10.3a; |
| | 1> if the received *RRCConnectionReconfiguration* includes the *sCellToAddModList*: |
| | 2> perform SCell addition or modification as specified in 5.3.10.3b; |
| | 1> if the received *RRCConnectionReconfiguration* includes the *scg*-*Configuration*; or |
| | 1> if the current UE configuration includes one or more split DRBs and the received *RRCConnectionReconfiguration* includes *radioResourceConfigDedicated* including *drb-ToAddModList:* |
| | 2> perform SCG reconfiguration as specified in 5.3.10.10; |
| | 1> if the received *RRCConnectionReconfiguration* includes the *systemInformationBlockType1Dedicated*: |
| | 2> perfom the actions upon reception of the *SystemInformationBlockType1* message as specified in 5.2.2.7; |
| | 1> perform the measurement related actions as specified in 5.5.6.1; |
| | 1> if the *RRCConnectionReconfiguration* message includes the *measConfig*: |
| | 2> perform the measurement configuration procedure as specified in 5.5.2; |
| | 1> perform the measurement identity autonomous removal as specified in 5.5.2.2a; |
| | 1> release *reportProximityConfig* and clear any associated proximity status reporting timer; |
| | 1> if the *RRCConnectionReconfiguration* message includes the *otherConfig*: |
| | 2> perform the other configuration procedure as specified in 5.3.10.9; |
| | 1> if the *RRCConnectionReconfiguration* message includes the *continuesource trans*: |
| | 2> perform the sidelink dedicated configuration procedure as specified in 5.3.10.x; |
| | 1> if the *RRCConnectionReconfiguration* message includes *wlan-OffloadInfo*: |
| | 2> perform the dedicated WLAN offload configuration procedure as specified in 5.6.12.2; |
| | 1> set the content of *RRCConnectionReconfigurationComplete* message as follows: |
| | 2> if the UE has radio link failure or handover failure information available in *VarRLF-Report* and if the RPLMN is included in *plmn-IdentityList* stored in *VarRLF-Report:* |
| | 3> include *rlf-InfoAvailable*; |
| | 2> if the UE has MBSFN logged measurements available for E-UTRA and if the RPLMN is included in *plmn-IdentityList* stored in *VarLogMeasReport* and if T330 is not running: |
| | 3> include *logMeasAvailableMBSFN*; |
| | 2> else if the UE has logged measurements available for E-UTRA and if the RPLMN is included in *plmn-IdentityList* stored in *VarLogMeasReport*: |
| | 3> include the *logMeasAvailable*; |
| | 2> if the UE has connection establishment failure information available in *VarConnEstFailReport* and if the RPLMN is equal to *plmn-Identity* stored in *VarConnEstFailReport*: |
| | 3> include *connEstFailInfoAvailable*; |
| | 1> submit the *RRCConnectionReconfigurationComplete* message to lower layers for transmission; |
| | 1> if MAC successfully completes the random access procedure: |
| | 2> the ue shall re-establish pdcp for all rbs that are established; re-establish mcg rlc, if configured, for all rbs that are established; |
| | 2> stop timer T304; |
| | 2> apply the parts of the CQI reporting configuration, the scheduling request configuration and the sounding RS configuration that do not require the UE to know the SFN of the target PCell, if any; |
| | 2> apply the parts of the measurement and the radio resource configuration that require the UE to know the SFN of the target PCell (e.g. measurement gaps, periodic CQI reporting, scheduling request configuration, sounding RS configuration), if any, upon acquiring the SFN of the target PCell; |
| | NOTE 3: Whenever the UE shall setup or reconfigure a configuration in accordance with a field that is received it applies the new configuration, except for the cases addressed by the above statements. |
| | 2> if the UE is configured to provide IDC indications: |
| | 3> if the UE has transmitted an *InDeviceCoexIndication* message during the last 1 second preceding reception of the *RRCConnectionReconfiguration* message including *mobilityControlInfo*: |
| | 4> initiate transmission of the *InDeviceCoexIndication* message in accordance with 5.6.9.3; |
| | 2> if the UE is configured to provide power preference indications: |
| | 3> if the UE has transmitted a *UEAssistanceInformation* message during the last 1 second preceding reception of the *RRCConnectionReconfiguration* message including *mobilityControlInfo*: |
| | 4> initiate transmission of the *UEAssistanceInformation* message in accordance with 5.6.10.3; |
| | 2> if *SystemInformationBlockType15* is broadcast by the PCell: |
| | 3> if the UE has transmitted a *MBMSInterestIndication* message during the last 1 second preceding reception of the *RRCConnectionReconfiguration* message including *mobilityControlInfo*: |
| | 4> ensure having a valid version of *SystemInformationBlockType15* for the PCell; |
| | 4> determine the set of MBMS frequencies of interest in accordance with 5.8.5.3; |
| | 4> initiate transmission of the *MBMSInterestIndication* message in accordance with 5.8.5.4; |

2> if *SystemInformationBlockType 18* is broadcast by the target PCell; and the UE transmitted a *SidelinkUEInformation* message including *commRxInterestedFreq* or *commTxResourceReq* during the last 1 second preceding reception of the *RRCConnectionReconfiguration* message including *mobilityControlInfo'*, or
2> if *SystemInformationBlockType 19* is broadcast by the target PCell; and the UE transmitted a *SidelinkUEInformation* message including *discRxInterest* or *discTxResourceReq* during the last 1 second preceding reception of the *RRCConnectionReconfiguration* message including *mobilityControlInfo'*.
3> initiate transmission of the *SidelinkUEInformation* message in accordance with 5.10.2.3;
2> the procedure ends;

NOTE 4: The UE is not required to determine the SFN of the target PCell by acquiring system information from that cell before performing RACK access in the target PCell.
**Table 1: Reception of an *RRCConnectionReconfiguration* not including the *mobilityControlInfo* by the UE**

## Claims

1. An apparatus for a user equipment, UE, the apparatus comprising processor circuitry configured to:
derive a first key for communication with a source evolved Node B, eNB, (110-1) during an attachment procedure with the source eNB (110-1) in accordance with an Authentication and Key Agreement, AKA, procedure;
receive and decode (605), from the source eNB (110-1), a radio resource control, RRC, message to obtain a handover, HO, command for a handover to a target eNB (110-2);
receive and decode (615) one or more downlink transmissions from the source eNB (110-1) after receipt of the HO command;
decrypt (610), using the first key, the one or more downlink transmissions;
generate (625) a second key for encrypting messages to be transmitted to the target eNB (110-20);
encode and transmit a Data Radio Bearer, DRB, message to the source eNB (110-1) using the first key, and
encode and transmit a Signaling Radio Bearer, SRB, message to the target eNB (110-2) using the second key.

2. The apparatus of claim 1, wherein the processor circuitry is further configured to:
receive and decode a RAR from the target base station (110-2);
after receiving and decoding the RAR from the eNB (110-2) and transmitting of a RRC Reestablishment Complete message, reset DRBs established with the source base station (110-1) and any remaining SRBs established with the source eNB and perform re-establishment procedures for the DRBs for communicating with the target base station (110-2) and the remaining SRBs for communicating with the target eNB .

3. The apparatus of any preceding claim, wherein the processor circuitry is configured to encode and transmit an RRC Connection Reconfiguration Complete message to the target base after receiving the RAR.

4. A method for a user equipment, UE (105), comprising:
deriving a first key for communication with a source evolved NodeB, eNB, (110-1) during an attachment procedure with the source base station (110-1) in accordance with an Authentication and Key Agreement, AKA, procedure;
receiving and decoding (605), from the source eNB (110-1), a radio resource control, RRC, message to obtain a handover, HO, command for a handover to a target eNB (110-2);
receiving and decoding (615) one or more downlink transmissions from the source eNB (110-1) after receipt of the HO command;
decrypting (610), using the first key, the one or more downlink transmissions;
generating (625) a second key for encrypting messages to be transmitted to the target eNB (110-20);
encoding and transmitting a Data Radio Bearer, DRB, message to the source eNB (110-1) using the first key, and
encoding and transmitting a Signaling Radio Bearer, SRB, message to the target eNB (110-2) using the second key.

5. The method of claim 4, further comprising:
receiving and decoding a RAR from the target eNB (110-2);
after receiving and decoding the RAR from the target eNB (110-2) and transmitting of a RRC Reestablishment Complete message, resetting DRBs established with the source eNB (110-1) and any remaining SRBs established with the source eNB and performing re-establishment procedures for the DRBs for communicating with the target eNB (110-2) and the remaining SRBs for communicating with the target eNB.

6. The method of either of claims 4 or 5, further comprising encoding and transmitting an RRC Connection Reconfiguration Complete message to the target eNB after receiving the RAR.

## Patentansprüche

1. Vorrichtung für ein Benutzergerät, UE, wobei die Vorrichtung eine Prozessorschaltung umfasst, die konfiguriert ist zum:
Ableiten eines ersten Schlüssels zur Kommunikation mit einem Source Evolved Node B, eNB, (110-1) während einer Anschlussprozedur mit dem Source-eNB (110-1) gemäß einer Authentifizierungs- und Schlüsselvereinbarungsprozedur, AKA-Prozedur;
Empfangen und Decodieren (605), von dem Source eNB (110-1), einer Funkressourcensteuerungsnachricht, RRC-Nachricht, um einen Übergabebefehl, HO-Befehl, für eine Übergabe an einen Ziel-eNB (110-2) zu erhalten;
Empfangen und Decodieren (615) einer oder mehrerer Downlink-Übertragungen von dem Source-eNB (110-1) nach Empfang des HO-Befehls;
Entschlüsseln (610), unter Verwendung des ersten Schlüssels, der einen oder mehreren Downlink-Übertragungen;
Erzeugen (625) eines zweiten Schlüssels zum Verschlüsseln von Nachrichten, die an den Ziel-eNB (110-20) übertragen werden sollen;
Codieren und Übertragen einer Datenfunkträger-Nachricht, DRB-Nachricht, an den Source eNB (110-1) unter Verwendung des ersten Schlüssels, und
Codieren und Übertragen einer Signalisierungsfunkträger-Nachricht, SRB-Nachricht, an den Ziel-eNB (110-2) unter Verwendung des zweiten Schlüssels.

2. Vorrichtung nach Anspruch 1, wobei die Prozessorschaltung ferner konfiguriert ist zum:
Empfangen und Decodieren einer RAR von der Zielbasisstation (110-2);
nach Empfangen und Decodieren der RAR von dem eNB (110-2) und Übertragen einer RRC-Wiederherstellungsabschlussnachricht, Zurücksetzen von DRBs, die mit der Source-Basisstation (110-1) eingerichtet wurden, und aller verbleibenden SRBs, die mit dem Source-eNB eingerichtet wurden, und Durchführen von
Wiederherstellungsprozeduren für die DRBs zum Kommunizieren mit der Zielbasisstation (110-2) und die verbleibenden SRBs zum Kommunizieren mit dem Ziel-eNB.

3. Vorrichtung nach einem der vorhergehenden Ansprüche, wobei die Prozessorschaltung konfiguriert ist zum Codieren und Übertragen einer RRC-Verbindungsneukonfigurationsabschlussnachricht an die Zielbasis nach Empfangen der RAR.

4. Verfahren für ein Benutzergerät, UE (105), umfassend:
Ableiten eines ersten Schlüssels zur Kommunikation mit einem Source Evolved Node B, eNB, (110-1) während einer Anschlussprozedur mit der Source-Basisstation (110-1) gemäß einer Authentifizierungs- und Schlüsselvereinbarungsprozedur, AKA-Prozedur;
Empfangen und Decodieren (605), von dem Source-eNB (110-1), einer Funkressourcensteuerungsnachricht, RRC-Nachricht, um einen Übergabebefehl, HO-Befehl, für eine Übergabe an einen Ziel-eNB (110-2) zu erhalten;
Empfangen und Decodieren (615) einer oder mehrerer Downlink-Übertragungen von dem Source-eNB (110-1) nach Empfang des HO-Befehls;
Entschlüsseln (610), unter Verwendung des ersten Schlüssels, der einen oder mehreren Downlink-Übertragungen;
Erzeugen (625) eines zweiten Schlüssels zum Verschlüsseln von Nachrichten, die an den Ziel-eNB (110-20) übertragen werden sollen;
Codieren und Übertragen einer Datenfunkträger-Nachricht, DRB-Nachricht, an den Source-eNB (110-1) unter Verwendung des ersten Schlüssels, und
Codieren und Übertragen einer Signalisierungsfunkträger-Nachricht, SRB-Nachricht, an den Ziel-eNB (110-2) unter Verwendung des zweiten Schlüssels.

5. Verfahren nach Anspruch 4, ferner umfassend:
Empfangen und Decodieren einer RAR von dem Ziel-eNB (110-2);
nach Empfangen und Decodieren der RAR von dem Ziel-eNB (110-2) und Übertragen einer RRC-Wiederherstellungsabschlussnachricht, Zurücksetzen von DRBs, die mit dem Source-eNB (110-1) eingerichtet wurden, und aller verbleibenden SRBs, die mit dem Source-eNB eingerichtet wurden, und Durchführen von
Wiederherstellungsprozeduren für die DRBs zum Kommunizieren mit dem Ziel-eNB (110-2) und die verbleibenden SRBs zum Kommunizieren mit dem Ziel-eNB.

6. Verfahren nach einem der Ansprüche 4 oder 5, ferner umfassend Codieren und Übertragen einer RRC-Verbindungsneukonfigurationsabschlussnachricht an den Ziel-eNB nach Empfangen der RAR.

## Revendications

1. Un appareil pour un équipement utilisateur, UE, l'appareil comprenant une circuiterie de processeur configurée pour :
dériver une première clé pour une communication avec un noeudb évolué, eNB, source (110-1) pendant une procédure de rattachement à l'eNB source (110-1) conformément à une procédure d'authentification et d'accord de clé, AKA ;
recevoir et décoder (605) un message de contrôle de ressources radio, RRC, provenant de l'eNB source (110-1),
pour obtenir un ordre de handover, HO, pour un handover vers un eNB cible (110-2) ;
recevoir et décoder (615) une ou plusieurs transmissions en liaison descendante provenant de l'eNB source (110-1) après la réception de l'ordre HO ;
déchiffrer (610), à l'aide de la première clé, les une ou plusieurs transmissions en liaison descendante ;
générer (625) une seconde clé pour chiffrer des messages à transmettre à l'eNB cible (110-20) ;
coder et transmettre un message de bearer radio de données, DRB, à l'eNB source (110-1) à l'aide de la première clé, et
coder et transmettre un message de bearer radio de signalisation à l'eNB cible (110-2) à l'aide de la seconde clé.

2. L'appareil selon la revendication 1, dans lequel la circuiterie de processeur est configurée en outre pour :
recevoir et décoder une RAR provenant de la station de base cible (110-2) ;
après la réception et le décodage de la RAR provenant de l'eNB cible (110-2) et la transmission d'un message d'achèvement de ré-établissement RRC, réinitialiser des DRB établis avec la station de base source (110-1) et n'importe quels SRB restants établis avec l'eNB source et réaliser des procédures de ré-établissement pour les DRB pour la communication avec la station de base cible (110-2) et les SRB restants pour la communication avec l'eNB cible.

3. L'appareil selon une revendication précédente, dans lequel la circuiterie de processeur est configurée pour coder et transmettre un message d'achèvement de reconfiguration de connexion RRC à la base cible après la réception de la RAR.

4. Un procédé pour un équipement utilisateur, UE (105), comprenant :
la dérivation d'une première clé pour une communication avec un noeudb évolué, eNB, source (110-1) pendant une procédure de rattachement à la station de base source (110-1) conformément à une procédure d'authentification et d'accord de clé, AKA ;
la réception et le décodage (605) d'un message de contrôle de ressources radio, RRC, provenant de l'eNB source (110-1), pour obtenir un ordre de handover, HO, pour un handover vers un eNB cible (110-2) ;
la réception et le décodage (615) d'une ou plusieurs transmissions en liaison descendante provenant de l'eNB source (110-1) après la réception de l'ordre HO ;
le déchiffrement (610), à l'aide de la première clé, des une ou plusieurs transmissions en liaison descendante ;
la génération (625) d'une seconde clé pour chiffrer des messages à transmettre à l'eNB cible (110-20) ;
le codage et la transmission d'un message de bearer radio de données, DRB, à l'eNB source (110-1) à l'aide de la première clé, et
le codage et la transmission d'un message de bearer radio de signalisation à l'eNB cible (110-2) à l'aide de la seconde clé.

5. Le procédé selon la revendication 4, comprenant en outre :
la réception et le décodage d'une RAR provenant de l'eNB cible (110-2) ;
après la réception et le décodage de la RAR provenant de l'eNB cible (110-2) et la transmission d'un message d'achèvement de ré-établissement RRC, la réinitialisation des DRB établis avec l'eNB source (110-1) et de n'importe quels SRB restants établis avec l'eNB source et la réalisation de procédures de ré-établissement pour les DRB pour la communication avec l'eNB cible (110-2) et les SRB restants pour la communication avec l'eNB cible.

6. Le procédé selon la revendication 4 ou 5, comprenant en outre le codage et la transmission d'un message d'achèvement de reconfiguration de connexion RRC à l'eNB cible après la réception de la RAR.
